Europäisches Patentamt

European Patent Office

Office européen des brevets

(11) Veröffentlichungsnummer: **0 204 689**
**A2**

(12) **EUROPÄISCHE PATENTANMELDUNG**

(21) Anmeldenummer: 86890136.4

(51) Int. Cl.⁴: **A47K 5/12**

(22) Anmeldetag: 13.05.86

(30) Priorität: 15.05.85 AT 1475/85

(43) Veröffentlichungstag der Anmeldung:
10.12.86 Patentblatt 86/50

(84) Benannte Vertragsstaaten:
BE CH DE FR GB IT LI NL SE

(71) Anmelder: **Tieser chemisch-technische Produkte GmbH & Co. KG**
**Steudelgasse 34**
**A-1100 Wien(AT)**

(72) Erfinder: **Wiesmayer, Hildegard**
**Finkengasse 20**
**A-2384 Breitenfurt(AT)**

(74) Vertreter: **Kliment, Peter, Dipl.-Ing. Mag.-jur.**
**Singerstrasse 8**
**A-1010 Wien(AT)**

(54) **Seifenspender.**

(57) Die Erfindung bezieht sich auf einen Seifenspender mit einem flüssige Seife enthaltenden Hohlkörper (2) und einer an diesem befestigten Spendereinrichtung mit einem vorzugsweise zylinderförmigen, flexiblen Spender (6), der an seinem freien Ende zu einer Kuppe (7) ausgeformt ist, die einem im wesentlichen diametral verlaufenden Schnitt aufweist, der die Wand des Spenders (6) durchtrennt. Um ein hohes Maß an Dichtung auch noch nach längerer Nutzungsdauer zu gewährleisten ist vorgesehen, daß im Bereich der Kuppe (7) des Spenders (6) eine umlaufende Nut (16) angeordnet ist, in die ein Ring (17) aus einem elastisch federnden Material z.B. einem Elastomer oder Gummi eingelegt ist.

Fig. 2

EP 0 204 689 A2

## Seifenspender

Die Erfindung bezieht sich auf einen Seifenspender mit einem flüssige Seife enthaltenden Hohlkörper und einer an diesem befestigten Spendereinrichtung mit einem vorzugsweise zylinderförmigen flexiblen Spender, der an seinem freien Ende zu einer Kuppe ausgeformt ist, die einem im wesentlichen diametral verlaufenden Schnitt aufweist, der die Wand des Spenders durchtrennt.

Ein solcher Seifenspender wurde z.B. durch die US-PS 2 772 817 bekannt. Bei diesem bekannten Seifenspender ist zwischen der Kappe des Spenders und dem Vorratsbehälter ein von der Kuppe distanziertes Rückschlagventil angeordnet, wobei auf den zwischen diesem und der Kuppe liegenden Dosierraum ein Pumpenstössel einwirkt.

Die Kuppe ist bei dem bekannten Seifenspender oval ausgebildet, wobei der Schnitt entlang der größeren Achse verläuft. Dieser bekannte Seifenspender weist den Nachteil auf, daß er nach relativ kurzer Nutzungsdauer zu einer mangelnden Dichtung des Schnittes neigt, obwohl die durch den Schnitt gebildete Öffnung des Spenders durch das Rückschlagventil, das ebenfalls durch eine mit einem Schnitt versehene Kappe gebildet ist, vom Gewicht der im Hohlkörper befindlichen Flüssigkeitssäule entlastet ist. Die Ursache für die mangelnde Dichtung des bekannten Seifenspenders, liegen darin, daß das elastische Material, aus dem der eigentliche Spender hergestellt ist, relativ rasch ermüdet und der Schnitt dann nicht mehr sicher schließt.

Ein weiterer Nachteil der bekannten Lösung liegt in dem aufwendigen Aufbau, der allein schon durch das Rückschlagventil bedingt ist.

Ziel der Erfindung ist es daher einen Seifenspender der eingangs erwähnten Art vorzuschlagen der sich durch einen einfachen Aufbau und ein hohes Maß an Dichtheit auch noch nach einer längeren Nutzungsdauer auszeichnet.

Erfindungsgemäß wird dies dadurch erreicht, daß im Bereich der Kuppe des Spenders eine umlaufende Nut angeordnet ist, in die ein Ring aus einem elastisch federnden Material z.B. einem Elastomer oder Gummi eingelegt ist. Durch die Anordnung des elastisch federnden Ringes im Bereich der Kuppe wird ein sicheres und festes Schließen des Schnittes noch Beendigung einer Druckeinwirkung auf den flexiblen Spender, die ein Öffnen des Schnittes in der Kuppe bewirkt, gewährleistet. Dabei besteht auch die Möglichkeit den Ring auf einfache Weise auszutauschen, falls dieser Ermüdungserscheinungen zeigen sollte. Nach einem weiteren Merkmal der Erfindung kann vorgesehen sein, daß an der dem freien Ende der Kuppe abgewandten Seite des Rings bzw. der diesen aufnehmenden Nut der Spender einen umlaufenden Bereich mit erhöhter Wandstärke aufweist. Dabei wirkt der Bereich mit erhöhter Wandstärke ähnlich einem Auflager eines Gelenkes, wobei durch die gewählte Anordnung des federnden Ringes sichergestellt ist, daß dieser die Kuppe im Sinne eines Schließens des Schnittes beaufschlagt.

Bei einer bevorzugten Ausführungsform der Erfindung kann vorgesehen sein, daß der Schnitt kleiner als der innere Durchmesser der umlaufenden Nut ist. Durch diese Maßnahme wird sichergestellt, daß der zwischen dem elastischen Ring und der Kuppe bzw. dem diese teilweise durchtrennenden Schnitt liegende Bereich durch den Ring in einen allseitigen Spannungszustand versetzt ist, was zur Erhöhung der Schließkraft des Schnittes beiträgt.

Weiters kann vorgesehen sein, daß der Spender auf einen Stutzen des Hohlkörpers aufgesteckt ist, der eine radial abstehende Nase aufweist und der Spender eine zu seiner Innenwand zu offene, der Nase entsprechende Ausnehmung aufweist. Dies stellt sicher, daß der Schnitt stets eine bestimmte Lage, vorzugsweise von der Frontseite des Seifenspenders zu dessen Rückseite verlaufend, einnimmt.

Ein weiteres Ziel der Erfindung ist es den Seifenspender so auszugestalten, daß er im montierten Zustand nicht ohne weiteres abgenommen werden kann. Dies ist insbesonders bei einer Aufstellung eines solchen z.B. in Gastgewerbebetrieben von Bedeutung.

Erfindungsgemäß wird dies dadurch erreicht, daß die Aufhängevorrichtung von Ansätzen des Hohlkörpers durchsetzbare Öffnungen, in die von diesen Ansätzen hintergreifbare Leisten hineinragen aufweist, und daß in der Aufhängevorrichtung, ein, vorzugsweise zwischen Anschlägen, verschiebbarer Riegel vorgesehen ist, der in seiner einen Endstellung eine Relativbewegung zwischen der Aufhängevorrichtung und dem Hohlkörper entlang der Leisten blockiert. Dabei ist es besonders vorteilhaft, wenn der Riegel senkrecht zu den Leisten verschiebbar ist und in seiner Sperrlage vollständig vom, vorzugsweise im Querschnitt rechteckigen Hohlkörper verdeckt ist. Dadurch ist der Riegel von vorne kaum zu sehen, sodaß der Riegel von einer uneingeweihten person auch nicht entfernt werden wird. Dies ermöglicht es mit sehr einfachen Mitteln einen relativ guten Diebstahlsschutz zu erzielen.

Weiters kann vorgesehen sein, daß der Riegel in seinem aus der Anhängevorrichtung herausragenden Endbereich eine Bohrung oder einen nasenartigen Vorsprung aufweist, wodurch der Riegel im Bedarfsfall mit einem spitzen Gegenstand z.B. einem Schraubendreher aus seiner Sperrstellung in seine entriegelte Stellung gebracht werden kann.

Die Erfindung wird nun an Hand der Zeichnung näher erläutert.

Dabei zeigen:

Fig. 1 eine Seitenansicht eines erfindungsgemäßen Seifenspenders;

Fig. 2 eine Explosionsdarstellung des Spenders samt dessen Befestigung;

Fig. 3 eine Ansicht des Spenders von der Kuppe her;

Fig. 4 eine Ansicht der Aufhängevorrichtung von der Wandseite her gegen den Hohlkörper;

Fig. 5 eine Ansicht der Aufhängevorrichtung von dem Hohlkörper her;

Fig. 6 einen Schnitt gemäß der Linie VI-VI in der

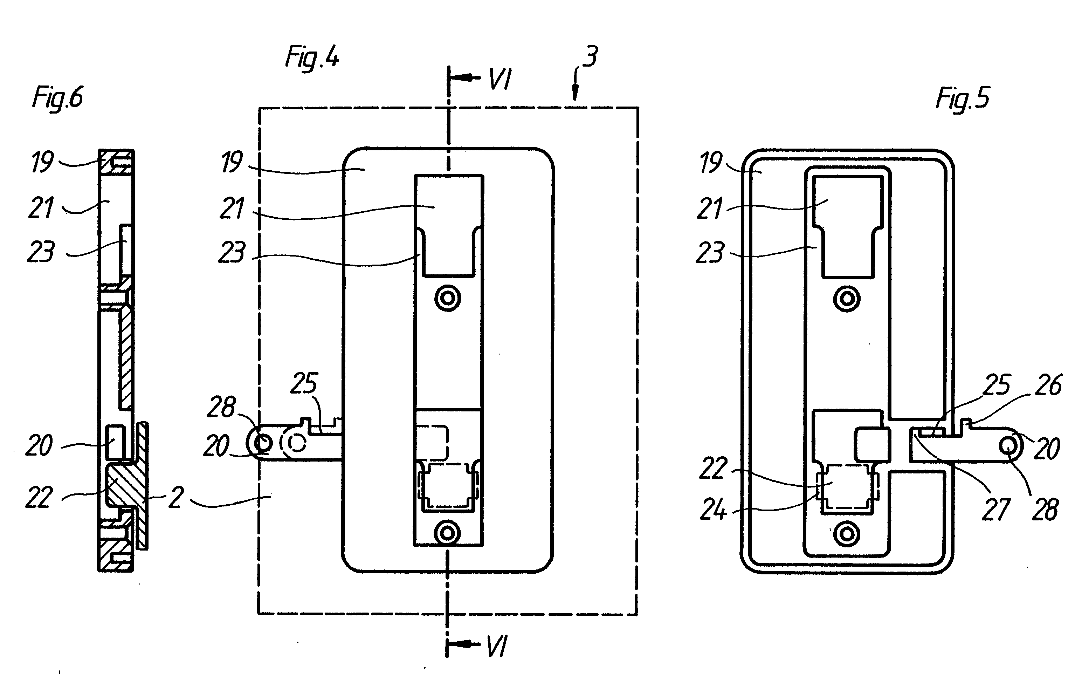

Fig. 5 mit angedeutetem Hohlkörper.

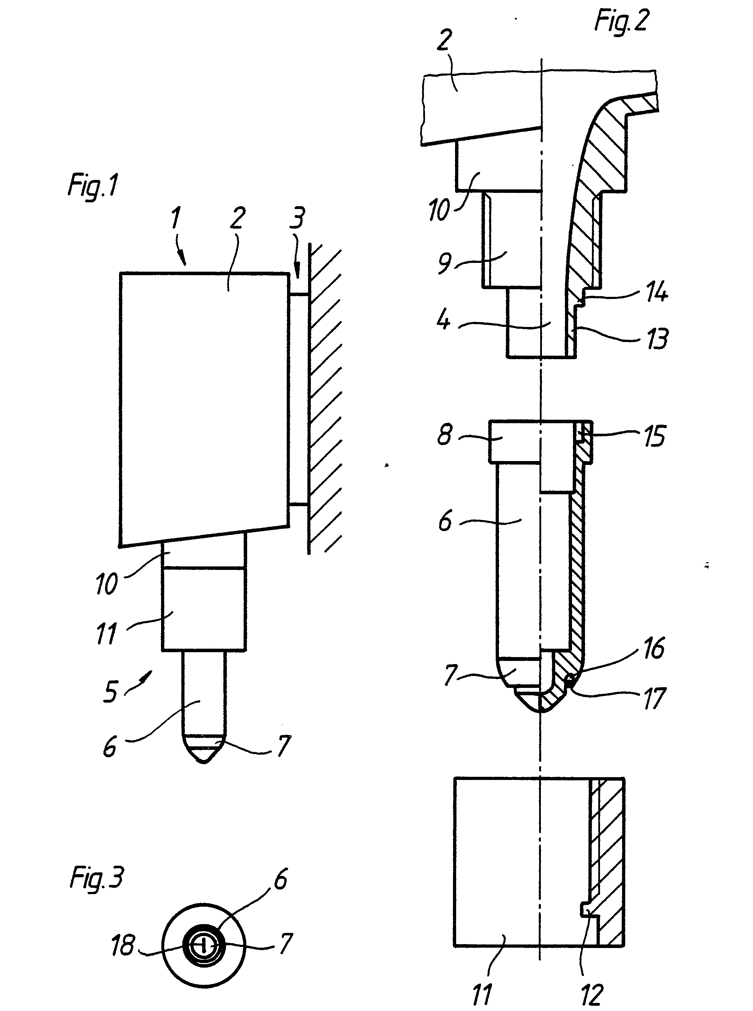

Ein in Fig. 1 ersichtlicher Seifenspender 1 besteht aus einem Hohlkörper 2 aus Kunststoff mit einer Aufhängevorrichtung 3 und einer an der Unterseite vorgesehenen Einfüll-bzw. Auslaßöffnung 4. An dieser ist eine gleichzeitig auch als Verschluß dienende Spendereinrichtung 5 befestigt, die aus einem zylinderförmigen, an einem Ende mit einer Kuppe 7 versehenen Spender 6 aus flexiblem Kunststoff oder Gummi gebildet ist. Das andere Ende des Spenders ist zu einem Flansch 8 ausgeformt, der, wie aus der Fig. 2 ersichtlich ist, gegen einen Ansatz 9 eines die Auslaßöffnung 4 aufweisenden Auslaßstutzen 10 preßbarist. Dazu ist eine Mutter 11 vorgesehen, die in ihrem Inneren eine Schulter 12 aufweist, die den Flansch 8 des Spenders 6 gegen den Ansatz 9 preßt. Die Mutter 11 wird dazu auf den Gewindeabschnitt des Auslaßstutzens 10 aufgeschraubt.

Der Auslaßstutzen 10 weist einen rohrförmigen Fortsatz 13 auf, auf den der Spender 6 aufschiebbar ist. Dieser Fortsatz 13 ist mit einer radial abstehenden Nase 14 versehen, die einer an der Innenwand des Spenders 6 angeordneten Ausnehmung 15 entspricht, die gemeinsam ein Verdrehen des Spenders 6 beim Aufschrauben der Mutter 11 verhindern.

Im Bereich der Kuppe 7 weist der Spender 6 eine umlaufende Nut 16 auf, in der ein Ring aus einem elastisch federnden Material, wie z.B. Elastomer oder Gummi eingesetzt ist. Dieser Ring 17 hält den inneren Bereich der Kuppe 7 unter einer radial nach innen gerichteten Spannung, durch die der in der Spitze der Kuppe 7 angeordnete Schnitt 18 geschlossen gehalten wird, wobei der Schnitt die Wand des Spenders 6 durchtrennt.

Sobald der Spender 6 zusammengequetscht wird, verformt sich die Kuppe 7, wodurch sich der Schnitt öffnet und die Seifenflüssigkeit austreten kann.

Die Fig. 4 und 5 zeigen die Aufhängevorrichtung 3, die im wesentlichen aus einer Grundplatte 19 und einem Riegel 20 besteht. Diese Grundplatte 19 weist zwei Öffnungen 21 auf, die von den Ansätzen 22 des Hohlkörpers 2 durchdringbar sind. In diese Öffnungen ragen seitlich angeordnete Leisten 23 hinein, deren Höhe geringer ist als die Höhe der Grundplatte 19. Bei eingehängtem Hohlkörper hintergreifen dessen Ansätze 22 mit ihren Fortsätzen 24 die Leisten 23, wodurch der Hohlkörper 2 sicher gehalten wird.

Der Riegel 20 ist in der Grundplatte 19 geführt und kann seitlich in eine der Öffnungen 21 eingeschoben werden, wobei bei eingeschobenem Riegel 20 eine Relativbewegung zwischen dem Ansatz 22 des Hohlkörpers 2 und der Grundplatte 19 verhindert wird, wie dies aus der Fig. 5 ersichtlich ist, in der ein Ansatz 22 strichliert dargestellt ist. .

Der Riegel 20 weist eine Schwächungsstelle 25 auf, deren Begrenzungswände als Anschläge 26, 27 dienen, die die Endstellungen des Riegels 20 festlegen. Dabei legt der Anschlag 26 die Sperrstellung und der Anschlag 27 die Freigabestellung fest.

Weiters weist der Riegel 20 an seinem freien Ende eine Bohrung 28 auf, die bei ausgeschobenem Riegel, wie aus Fig. 4 ersichtlich, im Bereich der seitlichen Kante des Hohlkörpers liegt, bei eingeschobenem Riegel aber von dem Hohlkörper 2 überdeckt ist.

Diese Bohrung ermöglicht das Ansetzen eines spitzen Gegenstandes um den Riegel aus dessen Sperrstellung in dessen Freigabestellung zu verschieben.

**Ansprüche**

1. Seifenspender mit einem flüssige Seife enthaltenden Hohlkörper und einer an diesem befestigten Spendereinrichtung mit einem vorzugsweise zylinderförmigen, flexiblen Spender, der an seinem freien Ende zu einer Kuppe ausgeformt ist, die einen im wesentlichen diametral verlaufenden Schnitt aufweist, der die Wand des Spenders durchtrennt,

dadurch gekennzeichnet,

daß im Bereich der Kuppe (7) des Spenders (6) eine umlaufende Nut angeordnet ist, in die ein Ring (17) aus einem elastisch federnden Material z.B. einem Elastomer oder Gummi eingelegt ist.

2. Seifenspender nach Anspruch 1,

dadurch gekennzeichnet,

daß an der dem freien Ende der Kuppe (7) abgewandten Seite des Rings (17) bzw. der diesen aufnehmenden Nut (16) der Spender einen umlaufenden Bereich mit erhöhter Wandstärke aufweist.

3. Seifenspender nach Anspruch 1 oder 2,

dadurch gekennzeichnet,

daß der Schnitt (18) kleiner als der innere Durchmesser der umlaufenden Nut (16) ist.

4. Seifenspender nach einem der Ansprüche 1 bis 3,

dadurch gekennzeichnet

daß der Spender (6) auf einen Stutzen (10) des Hohlkörpers (2) aufgesteckt ist, der eine radial abstehende Nase (14) aufweist und der Spender (6) eine zu seiner Innenwand zu offene, der Nase entsprechende Ausnehmung (15) aufweist.

5. Seifenspender nach Anspruch 1,

dadurch gekennzeichnet,

daß eine Aufhängevorrichtung (3) vorgesehen ist, die von Ansätzen (22) des Hohlkörpers (2) durchsetzbare Öffnungen (21) aufweist, in die von diesen Ansätzen hintergreifbare Leisten (23) hineinragen und daß in der Aufhängevorrichtung (3) ein vorzugsweise zwischen Anschlägen (26,27) verschiebbarer Riegel (20) vorgesehen ist, der in seiner einen Endstellung eine Relativbewegung zwischen der Aufhängevorrichtung (3) und dem Hohlkörper entlang der Leisten (23) blockiert.

6. Seifenspender nach Anspruch 5,

dadurch gekennzeichnet,

daß der Riegel (20) senkrecht zu den Leisten (23) verschiebbar ist und in seiner Sperrlage vollständig vom, vorzugsweise rechteckigen Hohlkörper (2) verdeckt ist.

7. Seifenspender nach Anspruch 6,

dadurch gekennzeichnet,

, daß der Riegel (20) in seinem aus der Anhängevorrichtung (3) herausragenden Endbereich eine Bohrung (28) oder einen nasenartigen Vorsprung aufweist. .

0 204 689

Fig.1

Fig.2

Fig.3

Fig.6

Fig.4

Fig.5

0 204 689